# EUROPEAN PATENT SPECIFICATION

(11) **EP 3 236 591 B1**
(45) Date of publication and mention of the grant of the patent: **31.07.2019**
(21) Application number: 16166025.3
(22) Date of filing: 19.04.2016
(51) Int. Cl.: H04B 7/04, H04J 11/00, H04W 16/30, H04W 36/06, H04W 36/32, H04W 52/14, H04W 52/34, H04W 72/04, H04L 5/00

(54) **CELLULAR NETWORK WITH A LINEAR CELL TOPOLOGY, NODE AND METHOD THEREFOR**
MOBILFUNKNETZ MIT LINEARER ZELLTOPOLOGIE, KNOTEN UND VERFAHREN DAFÜR
RÉSEAU CELLULAIRE AVEC UNE TOPOLOGIE DE CELLULE LINÉAIRE, NOEUD ET PROCÉDÉ ASSOCIÉ

(43) Date of publication of application: 25.10.2017
(73) Proprietor: Kapsch CarrierCom AG, 1120 Wien (AT)
(72) Inventor: JACQUES, Roger, 78320 Lévis Saint Nom (FR); BOTET, Gil, 78180 MONTIGNY-LE-BRETONNEUX (FR); GRUET, Christophe, 78180 Montigny le Bretonneux (FR)
(74) Representative: Weiser, Andreas

(56) References cited:
- WO-A1-2011/100520
- US-A1- 2013 301 604
- US-A1- 2016 037 550

## Description

The present invention relates to a node for a cellular network with a linear cell topology for wirelessly communicating with user terminals. The invention further relates to a cellular network comprising a plurality of nodes and a method for communicating between a user terminal and a node.

A cellular network comprises a plurality of radio transceivers or "nodes", through which users can gain access to the network by means of user terminals. For example, in cellular networks according to the LTE standard, a node is referred to as "eNB" (evolved Node B) and according to the GSM standard as "BTS" (Base Transceiver Station). Each node comprises an antenna and defines a cell, which is delimited by the coverage area of the antenna. If a user terminal is within the coverage area of a node, it can wirelessly communicate with the node by sending and receiving data to and from the node. To increase the capacity of the network for communications with user terminals, so-called frequency reuse schemes are employed, one type of which will be described in the following for the case of a one-dimensional cellular network.

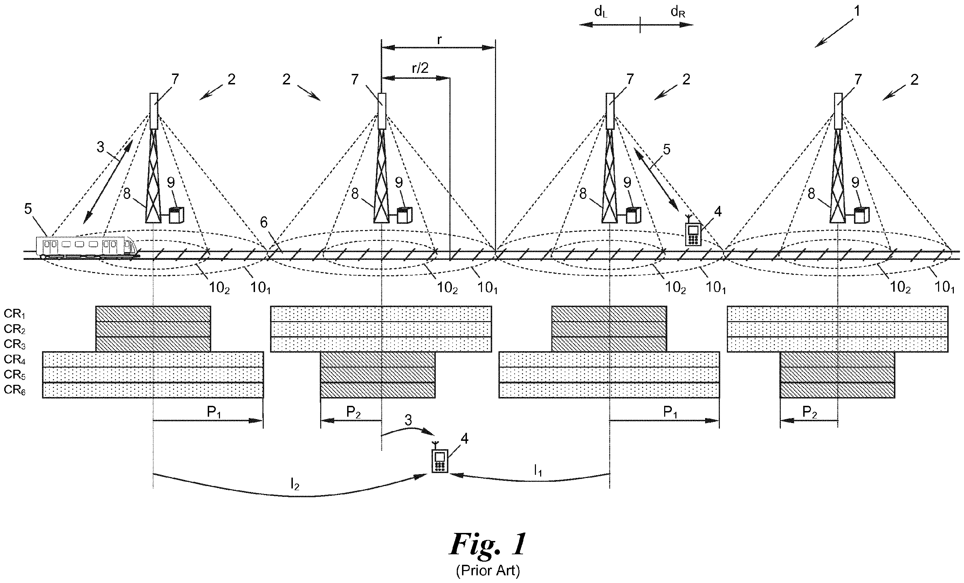

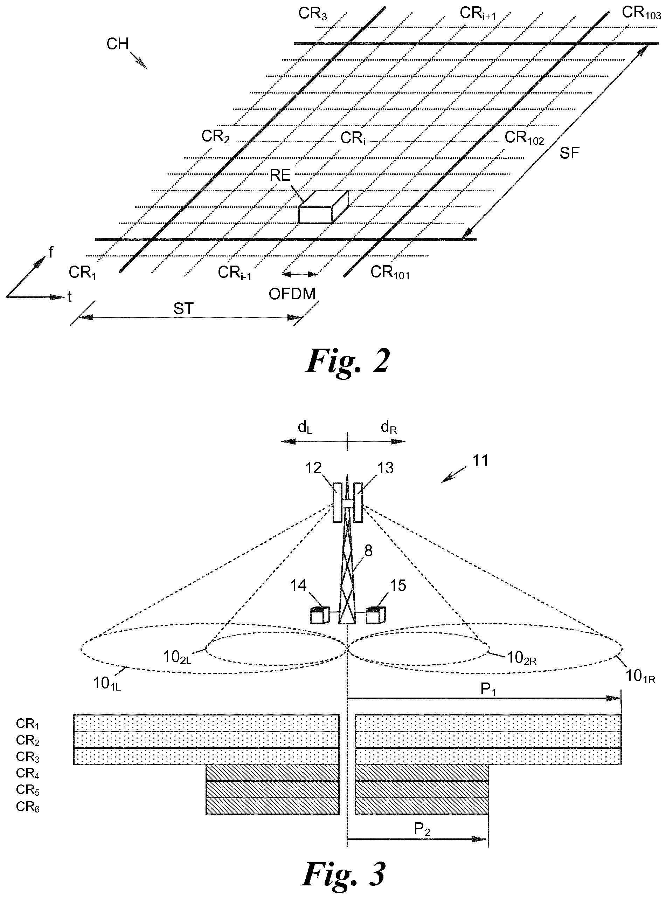

Fig. 1 shows a conventional cellular network 1 with a one-dimensional ("linear") cell topology. In this type of network, nodes 2 communicate data 3 with user terminals 4, which only travel in one direction d_{L} or the corresponding opposite direction d_{R}, e.g., by riding on a train 5 on a railway track 6, driving by car on a highway or in a tunnel, et cet. The communication between the node 2 and the user terminal 4 is conducted by communication standards known in the state of the art, such as 3GPP LTE/LTE-A, IEEE WiMAX 802.17e, GSM, or GSM-R. In such communication standards, the communication channel CH of a node 2 is divided in frequency f and/or time t into multiple channel resources CR₁, CR₂, ... generally CRᵢ, as can be seen in Fig. 2, which will be described in detail later.

With further reference to Fig. 1, each node 2 has an omnidirectional antenna 7 mounted on a support 8 and controlled by a transceiver 9. Omnidirectional antennas communicate data 3 in both directions d_{L}, d_{R} of the node 2, i.e., it does not matter if a user terminal 4 is located to the left or to the right of a node 2 to establish communication. Each antenna 7 thus exhibits a coverage area 10₁ with a range r. Interference occurs when neighbouring nodes 2 use the same channel resource CRᵢ.

For implementing a reuse scheme to enhance network capacity without excessive interferences, i.e., with a low signal-to-interference ratio (SINR), different power levels are employed for same channel resources CRᵢ of neighbouring nodes. Power levels P₁, P₂ of six exemplary channel resources CR₁, CR₂, ..., CR₆ are shown in the lower half of Fig. 1 beneath each node 2 in the horizontal direction, corresponding to different coverage areas 10₁ and 10₂ reached with those different power levels P₁, P₂, respectively.

For example, a node 2 uses its first three channel resources CR₁, CR₂, CR₃ to communicate data 3 at a high power level P₁ over a far coverage area 10₁ with range r, while it uses its last three communication resources CR₄, CR₅, CR₆ to communicate data 3 at a low power level P₂ over a near coverage area 10₂, e.g., with a range r/2. For user terminals 4 at a distance in the range of r/2 to r from the node 2, data 3 is communicated in one (or more) of the high power level channel resources CR₁, CR₂, CR₃. For user terminals 4 at a distance in the range of 0 to r/2 from the node 2, data 3 is communicated in one (or more) of the low power level channel resources CR₄, CR₅, CR₆. The distance of a user terminal 4 can, for example, be measured by means of the received signal strength indication (RSSI) in the node 2 and/or the user terminal 4.

The two neighbouring nodes 2 on either side of the node 2 described before use a reversed scheme for the power levels P₁, P₂ of the channel resources CRᵢ, i.e., a low power level P₂ for the first three communication channels CR₁, CR₂, CR₃, and a high power level P₁ for the last three communication channels CR₄, CR₅, CR₆. The one-dimensional network 1 is then constructed by alternatingly using the described nodes 2. Thus, a user terminal 4 near the edge of a cell of a node 2 will communicate data 3 in a channel resource CRᵢ at a high power level P₁ while the neighbouring node 2 will use only a lower power level P₂ for this specific channel resource CRᵢ. Interference from neighbouring nodes 2 is therefore reduced, while the same channel resources CRᵢ can be "reused" by neighbouring nodes 2 to a certain extent.

The described one-dimensional cellular network 1 has the drawback that the amount of data 3 that can be communicated by a node 2 is limited. Furthermore, the interference experienced by user terminals 4 leaves room for improvement.

WO 2011/100520, which lies in the field of cellular networks in which nodes cover extended geographical areas in two dimensions, shows cells that have multiple antennas that can employ different transmit powers but cover the same geographical areas.

US 2016/0037550 A1 shows that for a soft frequency reuse different power levels can be employed for different communication resources. For each power level a separate scheduler is employed.

According to document, US 2013/301604 A1 (SKOV PETER [CN] ET AL) 14 November 2013 (2013-11-14), as shown in the example of FIG. 1, a plurality of antenna sites 1 and 2 connected to a controller 30 can provide a cell 10. In the FIG. 1 example each of the antenna sites 1 and 2 provides a directional antenna providing beams 6 and 7. As shown, the directional beams 6 and 7 can overlap each other. An appropriate transmission scheme can be used to enable the two antenna site transmission diversity and reception or transmission of two transport blocks. The communications can take place on a single carrier, for example on a frequency resource.

It is an aim of the present invention to overcome the abovementioned drawbacks.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

To this end, in a first aspect the invention provides for a node of the aforementioned type, wherein the node is configured to communicate data in at least a first and a second channel resource of a communication channel, which are separated in at least one of frequency and time, and wherein the node is further configured to employ different power levels for different channel resources, which is distinguished in that:
the node comprises a first and a second directional antenna, each directed in a different direction and each covering one side of the node,
wherein the node is configured to act as a single cell of the cellular network by broadcasting a same cell-ID over both antennas, and
wherein the node is further configured to independently communicate different data over the first and the second antenna in a same channel resource.

By using two directional antennas, each covering one side of the node, the amount of communicated data can be doubled. This can be used to double the number of user terminals a node can host in its coverage area.

Even though its throughput or hosting capacity is twice as high, the node still appears as a state of the art node to a user terminal. This is achieved by broadcasting the same cell-ID over both antennas, which leads the user terminals to belief that a conventional node is used. Thus, there is no need to exchange or re-program user terminals to be compatible with the new node of the network, which significantly simplifies implementation.

Preferably, the node is further configured to employ different power levels for a same channel resource over said first and second antenna. This allows the node not only to communicate twice the amount of data, but also to use different power level schemes for different directions. The usage of different power level schemes in different directions can be used to adapt the node to neighbouring nodes and/or to employ completely new reuse schemes between neighbouring nodes. Apart therefrom, further energy or power savings can be achieved since fewer high power levels can be employed, e.g., if there is only one user terminal close to the edge of the cell, the high power level does not have to be used for both directions. Furthermore, using lower power levels for some channel resources leaves more power for the other channel resources.

Especially preferably, the node is configured to communicate data
- in the first channel resource over the first antenna at a first power level,
- in the first channel resource over the second antenna at a second power level, which is lower than the first power level,
- in the second channel resource over the first antenna at the second power level, and
- in the second channel resource over the second antenna at the first power level.

In this way, the node employs a "Z-shaped" power level scheme, which leads to reduced interference for user terminals near the node: For a user terminal at a distance of, e.g., half of the maximum cell range r, i.e., 0,5 r to the node, the second interfering node is now at a greater distance of 3,5 r to the user terminal, while with a reuse scheme according to the state of the art the second interfering node is at a distance of only 2,5 r. Furthermore, when constructing a linear network, nodes of the same type can be employed all in the same way one after the other, which greatly simplifies network planning, production, and installation.

In a preferred embodiment of the invention, the node is configured to communicate data in a third channel resource over the first and the second antenna, wherein the node is further configured to communicate same data over the first and the second antenna in the third channel resource. By means of the third channel resource, in which data is communicated in parallel over both antennas, an intra-cell "switching" for a user terminal passing from one directional antenna to the other directional antenna of the same node can be greatly facilitated. Right beneath the antennas, the position of a user terminal cannot be reliably determined as to whether it is left or right of the node. Since there is uncertainty over the exact switching moment from one antenna to the other, the node may encounter problems in correctly allocating and attributing communications in same channel resources on either sides of the node to different user terminals. By using dedicated third channel resources with same data on either antenna of the node for very close user terminals, this allows for an undisturbed communication with user terminals passing through the close area of the node.

Preferably, the node is configured to communicate data in the third channel resource at a power level that is lower than the power levels of the first and second channel resources. Since the third channel resources are used only for user terminals close to the node, the power level of the third channel resources can be reduced as well. Thus, interferences are reduced for user terminals communicating in the same channel resource with a different node.

The invention envisages two alternative embodiments for allocating the third channel resource. In the first embodiment, the node is configured to use a specific one of all channel resources of the communication channel for the third channel resource on both antennas. The node thus uses a predetermined channel resource, e.g., the lowest frequency and/or time slots, for the third channel resource. Neighbouring nodes then always know, which channel resource is not used for communication with user terminals at a high power level, and can thus themselves proceed to use this channel resource for communication with user terminals in their own cell at a high power level.

In the alternative embodiment, the node is configured to reserve specific channel resources of all channel resources of the communication channel on both antennas for the channel resources having properties of the first channel resource and the second channel resource, respectively, and the node is further configured to choose and use a specific channel resource from said reserved channel resources for the third channel resource based on a usage of the reserved channel resources. In this embodiment, pools of first and second channel resources can be grouped together for each antenna, such that, e.g., the specific channel resources occupy the first channel resources and the second channel resources occupy the other specific channel resources when the node employs a symmetrical ("T-shaped") power level scheme. Alternatively, an asymmetrical ("Z-shaped") power level scheme can be employed. The node then evaluates, which channel resource is used the least on both antennas, e.g., which channel resource is currently not used at all on both antennas, and assigns the third channel resource/s to this underused channel resource/s.

Preferably, the node is configured to measure the distance, e.g., by means of received signal strength indication (RSSI) or timing advance (TA), of a user terminal and to assign a channel resource with a corresponding power level to this user terminal to communicate data in this channel resource. By means of this, the node can, e.g., assign the first channel resource with the first power level to a user terminal near the edge of the cell and assign the second channel resource to a user terminal close to the node. Generally, the node can assign the first channel resource to a far user terminal, the second channel resource to a medium user terminal, and the third channel resource to a near user terminal, wherein the terms far, medium, near are relative with respect to each other.

It is especially preferred if the channel resources are resource blocks according to a 3GPP LTE or LTE-A standard. Resource blocks according to those standards are based on OFDM (orthogonal frequency-division multiplexing) symbols, which are orthogonal to each other. Thus, the resource blocks can be managed and assigned to different user terminals in a simple manner.

In a second aspect, the invention provides for a cellular network comprising a plurality of nodes according to the embodiments given above, wherein one of the antennas of a first node substantially faces one of the antennas of a second node. Thus, a one-dimensional ("linear") network is created. Preferably, the nodes are arranged in such a way that the coverage areas of the antennas facing each other adjoin or overlap at least partially such that a user terminal moving from one node to another experiences no loss of communication.

Preferably, the first antenna of the first node substantially faces the second antenna of the second node. Thus, a one-dimensional network of nodes with a substantially "asymmetrical" or "Z-shaped" power level scheme can be created. Such a network has especially low interferences for user terminals near the nodes, as described above. Furthermore, the same type of node can be used for all nodes, which is not possible in state of the art networks. Alternatively, combinations of different nodes can be employed, e.g., a sequence "Z-shaped" - "T-shaped" - inverse "Z-shaped" - inverse "T-shaped".

Further preferably, nodes assign their channel resources according to the scheme employed by their neighbouring nodes, i.e., power levels are classified as high and medium, with respect to one another, and a node is configured to only communicate data in a channel resource at a high power level over its first antenna if the power level of a channel resource, used by an antenna facing said first antenna, of a neighbouring node is classified as medium. Thus, it is ensured that a user terminal on the edge of the cell does not experience a high interference from a neighbouring node in the same channel resource.

In a third aspect of the invention, a method for communicating between a user terminal and a node is provided. This method comprises the steps in the following order:
communicating with the user terminal in the second channel resource over the first antenna when the user terminal is within a first predetermined distance from the node;
communicating with the user terminal in the third channel resource over the first antenna while simultaneously trying to communicate the same data with the user terminal using the third channel resource over the second antenna when the user terminal is within a second predetermined distance from the node, which is smaller than the second distance; and
communicating with the user terminal in the third channel resource over the second antenna while simultaneously trying to communicate the same data with the user terminal using the third channel resource over the first antenna when the user terminal is within the second predetermined distance from the node.

This method avoids an unsteady intra-cell handover from the first antenna to the second antenna by utilizing the third channel resource with the properties as described above. A tradeoff is thus achieved by utilizing a channel resource with an asymmetrical power level scheme with a high data throughput when the user terminal is at a far or medium distance from the node on the one hand and one (or more) third channel resource/s with a symmetrical power level scheme with a lower throughput when the user terminal is near the node on the other hand.

Furthermore, the method can comprise the subsequent step of communicating with the user terminal in a channel resource having the same power level as the second channel resource over the second antenna when the user terminal is within the first predetermined distance from the node. It is thus ensured that the user terminal re-enters the range of a channel resource having the same power level as before it entered the range of the third channel resource.

Preferably, the power level of the second channel resource is higher than the power level of the third channel resource. Thus, energy can be saved and interferences can be further reduced for user terminals in different nodes using the same channel resource.

The invention shall now be explained in more detail below on the basis of preferred exemplary embodiments thereof with reference to the accompanying drawings, in which:
Fig. 1 shows a linear cellular network according to the state of the art;
Fig. 2 shows an exemplary allocation of channel resources;
Fig. 3 shows a node and a symmetrical channel resource power level scheme according to the invention;
Fig. 4 shows a linear cellular network having an asymmetrical channel resource power level scheme according to the invention;
Fig. 5 shows a variant of the channel resource power level scheme of the linear cellular network of Fig. 4;
Figs. 6 and 7 show a node having symmetrical and asymmetrical channel resource power level schemes, respectively, with fixed third channel resources;
Figs. 8 and 9 show a node having fixed symmetrical and asymmetrical channel resource power level schemes, respectively, with adaptive third channel resources.

With respect to Fig. 1, which shows the state of the art, it is referred to the introduction. In the following description of Figs. 2 to 9 same reference numbers are used for same components as in Fig. 1.

Just as discussed above for the state of the art, the field of the embodiments described below is a linear, one-dimensional network 1 of nodes 2 communicating data 3 with user terminals 4. Linear or one-dimensional means in this context that the nodes 2 are arranged in a chain-like manner and that the nodes 2 have coverage areas 10₁, 10₂ that substantially adjoin or overlap so that a user terminal 4 can move from one node 2 to the next without interrupting communication. The standard for communication can be as described before, e.g., LTE, LTE-A, IEEE WiMAX 802.16e, GSM, GSM-R, etc, wherein the communication channel CH is divided into multiple channel resources CRᵢ as can be seen in Fig. 2.

Fig. 2 shows an exemplary definition of the communication channel CH used by the nodes 2 for communication. The channel CH is subdivided in frequency f into frequency bands SF and in time t into time slots ST; a combination of a frequency band SF and a time slot ST is called a channel resource CRᵢ. Of course, the communication channel CH could also be divided only in time t into time slots ST, such as in TDMA (time division multiple access) standards; or be divided only in frequency f into frequency bands SF, such as in FDMA (frequency division multiple access) standards. In LTE, a channel resource CRᵢ is called a "resource block" and carries six or seven OFDM symbols on 12 subcarriers, one subcarrier of one OFDM symbol representing a resource element RE of the resource block CRᵢ.

In Figs. 1 and 3 to 9, only six exemplary channel resources CR₁, ..., CR₆ are shown, while in reality any arbitrary number can be employed.

Fig. 3 shows a node 11 having two directional antennas 12, 13 mounted on the support 8. Each directional antenna 12, 13 is operated by its own transceiver 14, 15. Data 3 can thus be communicated independently to user terminals 4 in either direction d_{L}, d_{R} of the node 11, even in a same channel resource CRᵢ. By the term "same" channel resource CRᵢ it is meant that a channel resource CRᵢ of the communication channel CH of the one directional antenna 11 is equal in frequency band SF and time slot ST with that of the communication channel CH of the other directional antenna 12.

Each antenna 12, 13 has different coverage areas 10_{1L}, 10_{1R}, 10_{2L}, 10_{2R} depending on the power levels P₁, P₂ used. The node 11 can further use a different power level P₁, P₂ for each channel resource CRᵢ used on each antenna 12, 13. As can be seen from Fig. 3, the left and right coverage areas 10_{1L}, 10_{2L}, 10_{1R}, 10_{2R} of the antennas 12, 13 adjoin or overlap right beneath the node 11 to allow for a continuous communication when a user terminal 4 passes the node 11.

The node 11 broadcasts the same cell-identifier (cell-ID) for the entire cellular network cell comprised of the coverage areas 10_{1L}, 10_{2L}, 10_{1R}, 10_{2R} over both antennas 12, 13 so that the node 11 acts as a single cell of the cellular network 1. To this end, the common channels (e.g., in LTE: downlink PSS/SSS/PBCH/RS; uplink RACH) of the communication channel CH can be managed simultaneously for channel resources CRᵢ on both sides of the node 11 to implement this single-cell behaviour, while the dedicated control/traffic channels (e.g., in LTE: downlink PDCCH/PDSCH; uplink PUCCH/PUSCH) are managed independently to host different pools of user terminals 4 on either side of the node 11.

As shown in Fig. 3, each channel resource CRᵢ can be used with the same power level P₁, P₂ for each antenna 12, 13 of the node 11 to form a symmetrical power level profile, which appears - when power levels P₁, P₂ are grouped together in the representation - as substantially "T-shaped". It is understood that the term "T-shaped" is used for illustrative purposes and also comprises, for example, inverse "T-shaped" power level schemes. A linear cellular network 1 can then be constructed by arranging nodes in an alternating manner as is shown in Fig. 1, with "T"s and inverted "T"s following one another. The node 11 of Fig. 3, however, can communicate twice the amount of data 3 as compared to the node 2 of Fig. 1, since communications with user terminals 4 on both sides of the node 11 are managed independently.

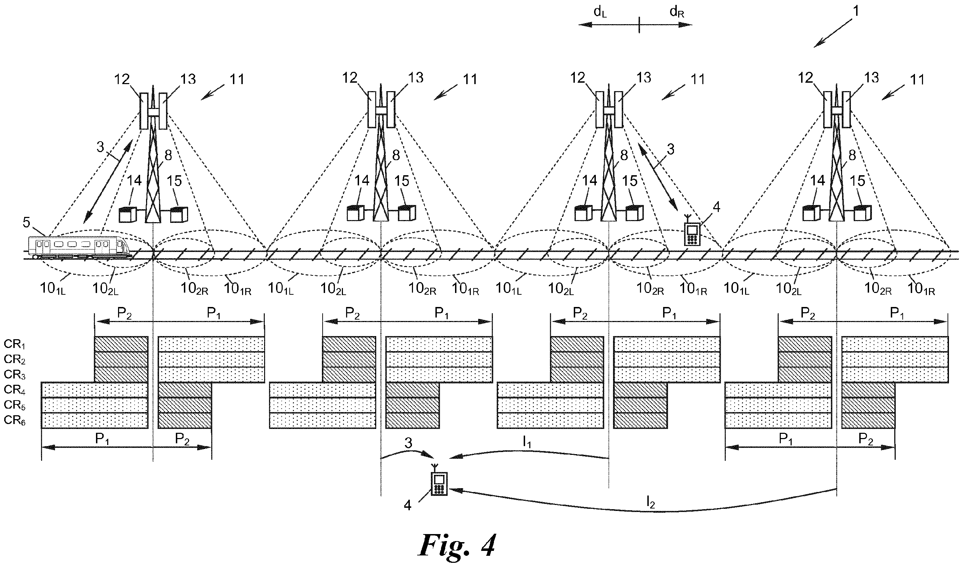

Fig. 4 shows a linear cellular network 1 with nodes 11, which are structurally the same as the node 11 shown in Fig. 3. However, the nodes 11 of Fig. 4 employ an asymmetrical power level scheme, meaning that a node can employ different power levels P₁, P₂ for a same channel resource CRᵢ over different antennas 12, 13. When the power levels P₁, P₂ are grouped together in the representation, the node 11 has a characteristic "Z-shaped" power level profile. It is understood that the term "Z-shaped" is used for illustrative purposes and also comprises, for example, inverse "Z-shaped", i.e., "S-shaped" power level schemes. An exemplary first channel resource CR₆ thus has a first power level P₁ over the first antenna 12 and a second power level P₂ over the second antenna 13, while an exemplary second channel resource CR₁ has the second power level P₂ over the first antenna 12 and the first power level P₁ over the second antenna 13.

The examples of Figs. 3 and 4 show channel resources CRᵢ with the same power level schemes grouped together to form said T- and Z-shaped power profiles. However, channel resources CRᵢ can also be arranged in an alternating or random manner in a node 11.

To construct the linear cellular network 1, identical nodes 11 with asymmetrical power level schemes can be arranged next to each other and do not have to be positioned in an alternating manner, as was the case with nodes as shown in Fig. 1. In contrast to Fig. 1, the linear cellular network 1 further exerts less interferences on user terminals 4 close to a node 11, as shown in the lower halves of Figs. 1 and 4:
Fig. 1 shows a user terminal 4 at a distance of r/2, i.e., half of the range of the "maximum" coverage area 10₁ of the node 11 at the high power level P₁, which here corresponds to the edge of the coverage area 10₂ at the lower power level P₂. The user terminal 4 communicates with the closest node 11 in the channel resource CR₆ and experiences interferences when another node 11 communicates data 3 in the same channel resource CR₆ at a high power level P₁. Interferences caused by nodes 11 communicating data 3 in the same channel resource CR₆ but at a lower power level P₂ are neglected for this analysis. The user terminal 4 in Fig. 1 thus experiences a first interference I₁ from a node 11 at a distance of 1,5 r and a second interference I₂ from a node 11 at a distance of 2,5 r from the user terminal 4.

In the linear cellular network 1 of Fig. 4, however, the user terminal 4 experiences less interference from the second closest node 11. Again, the exemplary user terminal 4 is at a distance r/2 from the node 11, with which it communicates in the channel resource CR₆, and experiences interference I₁ from the closest node 11 at a distance of 1,5 r. The user terminal 4 in Fig. 4 experiences no interference from the node 11 to its left since this node 11 uses this channel CR₆ only at a lower power level P₂. The interference I₂ from the second interfering node 11 originates from a distance of 3,5 r to the right of user terminal 4, which yields less interference than the interference I₂ experienced over the distance of 2,5 r in the case of Fig. 1. Therefore, the SINR (signal to interference ratio) of the communications is improved.

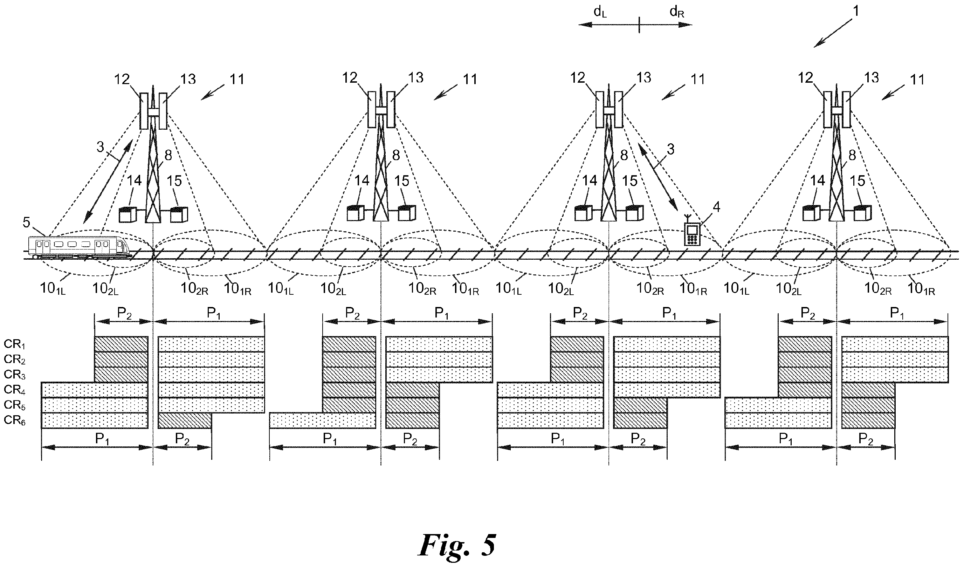

Instead of equally distributing power levels P₁, P₂ to the channel resources CRᵢ as in Fig. 4, a node 11 can assign power levels P₁, P₂ according to its own needs, as is shown in Fig. 5. A node 11 can thus employ channel resources CRᵢ with symmetrical power levels as well as with asymmetrical power levels. However, a node 11 should only assign a high power level P₁ to one of its channel resources CR on one antenna 12, 13 if an antenna 12, 13 of a neighbouring node 11 employs a lower power level P₂ for the same channel resource CRᵢ. In this way, a dynamic power level allocation can be achieved, such that a node 11 can fulfil its own needs as well as comply with restrictions of another node 11.

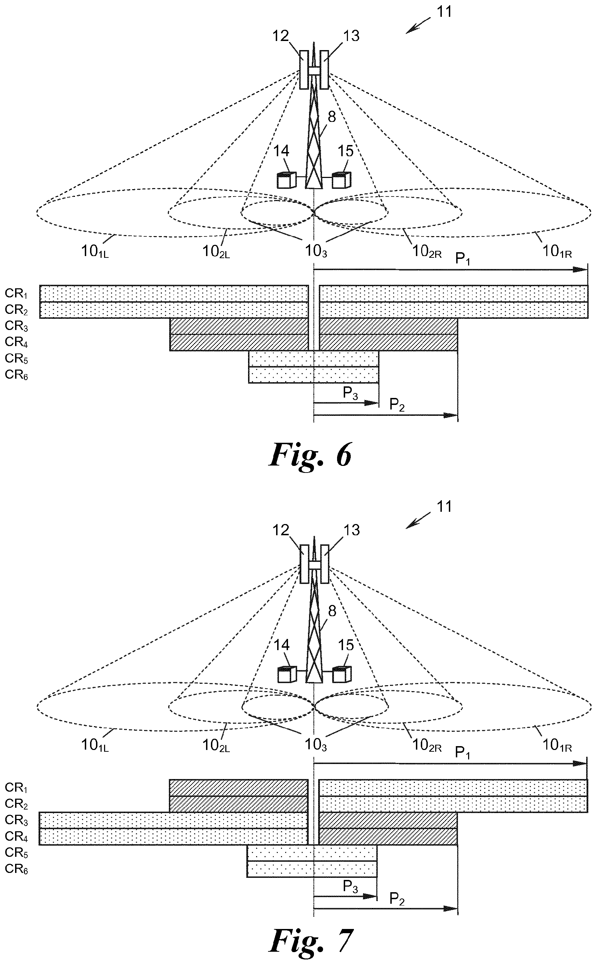

In a further embodiment now described with reference to Figs. 6 - 9, which facilitates a smooth passing of a user terminal 4 under the node 11, the node 11 communicates data 3 symmetrically over both antennas 12, 13 in at least one dedicated channel resource CRᵢ (also called "third" channel resource herein). As described before, communication is performed between the node 11 and the user terminal 4 according to the distance at which the user terminal 4 is located, i.e., according to whether the user terminal is within one of the far field coverage areas 10_{1L}, 10_{1R} or one of the near field coverage areas 10_{2L}, 10_{2R}, the latter also being called "medium" coverage areas in the following. This distance can be directly measured or inferred by means of the received signal strength indication (RSSI) or timing advance (TA). The user terminal 4 is then assigned a channel resource CRᵢ with the respective power level P₁, P₂ corresponding to the distance of the user terminal 4.

When the user terminal 4 is very close to the node 11, however, the location of the user terminal 4 cannot be measured accurately anymore due to scatterings and to a lesser degree interferences. The node 11 thus does not know anymore whether the left or the right antenna 12, 13 is or should be used for a communication and therefore may not attribute the user terminal 4 to the correct left or right communication handling of the node 11. By communicating data 3 over both antennas 12, 13 in the third channel resource common to both sides of the node 11, the exact location of the user terminal 4 becomes redundant since the user terminal 4 can potentially communicate data 3 over both antennas 12, 13.

The power level P₃ for the third channel resource CRᵢ can then be reduced accordingly on both antennas 12, 13 since this parallel communication is only supposed to be enabled for very close user terminals 4 passing the node 11 within a near or close coverage area 10₃ of the antennas 12, 13.

When a user terminal 4 passes through the entire coverage area from, e.g., left to right 10_{1L} → 10_{2L} → 10_{3L} → 10_{3R} → 10_{2R} → 10_{1R} of the exemplary node 11 of Fig. 6, it will thus normally first communicate over the first antenna 12 in one or more first channel resources CR₁, CR₂ at a high (first) power level P₁, then over the first antenna 12 in one or more second channel resource CR₃, CR₄ at a medium (second) power level P₂, and then over the first antenna 12 in one or more of the third channel resources CR₅, CR₆ at a low (third) power level P₃. Next, the user terminal 4 will leave the coverage area of the first antenna 12 and enter the coverage area of the second antenna 13 and thus continue to communicate with the node 11 in one or more of the third channel resources CR₅, CR₆, however, now with the second antenna 13. As the user terminal 4 moves further away from the node 11, it will then communicate with the second antenna 13 at the medium power level P₂ in one or more of the second channel resources CR₃, CR₄ and later with the second antenna 13 at the high power level P₃ in one or more of the first channel resources CR₁, CR₂.

Fig. 6 shows a node 11 that employs a symmetrical power level scheme, wherein power levels P₁, P₂, P₃ are assigned to pools of specific channel resources CRᵢ, and especially the third channel resource is assigned to specific channel resources CRᵢ dedicated therefor, such as, e.g., the last two channel resources CR₅, CR₆.

Fig. 7 shows a node 11 employing an asymmetrical power level scheme, wherein the power levels P₁, P₂, P₃ are assigned to pools of specific channel resources CRᵢ for each antenna 12, 13. Just as in Fig. 6, the third channel resource is assigned to the last two channel resources CR₅, CR₆.

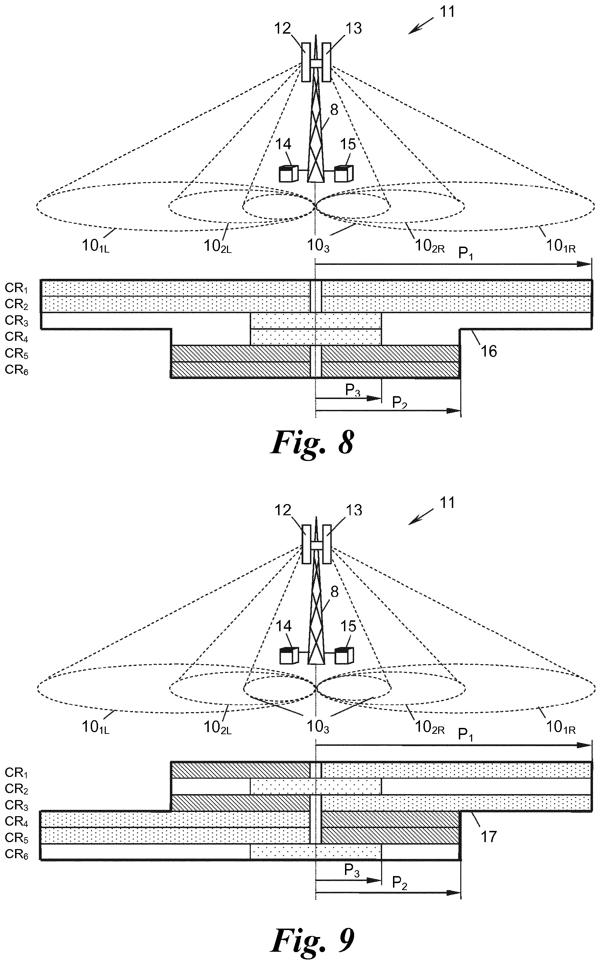

Figs. 8 and 9 show nodes 11, in which the third channel resource can be assigned adaptively to the needs of the node 11. In Fig. 8, the node 11 reserves high power levels P₁ for a pool of channel resources CRᵢ, e.g., the first three channel resources CR₁, CR₂, CR₃, and lower power levels P₂ for a pool of different channel resources CRᵢ, e.g., the last three channel resources CR₄, CR₅, CR₆, so that the power level scheme has a T-shaped maximum power level outline 16. When a user terminal 4 approaches the node 11 to pass underneath it, the node 11 checks all of its channel resources CRᵢ and evaluates which one/s is/are used the least. The third channel resource/s is/are then allocated to this/these specific channel resource/s CRᵢ with the least usage, here to the channel resources CR₃, CR₄. Of course, the power level/s P₃ for the third channel resource/s CR₃ can again be chosen lower than the first and/or second power level P₁, P₂.

Fig. 9 shows an embodiment of an adaptive node 11, in which an asymmetrical power level scheme is employed. The power levels P₁, P₂ are reserved for pools of each channel resource CRᵢ and each antenna 12, 13, respectively, so that the power level scheme has a Z-shaped maximum power level outline 17. Again, it is evaluated which channel resource/s CRᵢ is/are used the least on both antennas 12, 13. The symmetrical third channel resource/s is/are then allocated to this/these channel resource/s CRᵢ, here the channel resources CR₂ and CR₆. Depending on the traffic within the cell, all channel resources CRᵢ can be used as third channel resources or even non at all.

The "rigid" maximum power level outline 16, 17 of a node 11 can be used by a neighbouring node 11 to predict channel resources CRᵢ with high power levels P₁. Such high power channel resources CRᵢ should not be used by said neighbouring node 11 to communicate data 3 at a high power level P₁ in the corresponding direction of that node 11 with the rigid maximum power level outline 16, 17.

The invention is not restricted to the specific embodiments described in detail herein, but encompasses all variants, combinations and modifications thereof that fall within the framework of the appended claims.

## Claims

1. Node for a cellular network with a linear cell topology for wirelessly communicating with user terminals, wherein the network with the linear cell topology has nodes (2) that are arranged in a chain-like manner and have coverage areas (10₁, 10₂) that substantially adjoin or overlap so that a user terminal (4) can move from one node (2) to the next without interrupting communication,
wherein the node (11) has a single support (8) and is configured to communicate data (3) in at least a first and a second channel resource of channel resources (CRi) of a communication channel (CH), which are separated in at least one of frequency (f) and time (t), and
wherein the node (11) is further configured to employ different power levels (P₁, P₂) for different channel resources of the channel resources (CRi)of the communication channel, wherein the node (11) comprises a first and a second directional antenna (12, 13) mounted on the single support (8), each directed in a different direction (d_{L}, d_{R}) and each covering one side of the node (11),
wherein the node (11) is configured to act as a single cell of the cellular network (1) by broadcasting a same cell-ID over both antennas (12, 13), and
wherein the node (11) is further configured to independently communicate different data (3) over the first and the second antenna (12, 13) in a same channel resource of the channel resources (CRi)of the communication channel. .

2. Node according to claim 1, wherein the node (11) is further configured to employ different power levels (P₁, P₂) for a same channel resource (CRᵢ) over said first and second antenna (12, 13).

3. Node according to claim 1 or 2, wherein the node (11) is configured to communicate data (3)
- in the first channel resource (CR₆) over the first antenna (12) at a first power level (P₁),
- in the first channel resource (CR₆) over the second antenna (13) at a second power level (P₂), which is lower than the first power level (P₁),
- in the second channel resource (CR₁) over the first antenna (12) at the second power level (P₂), and
- in the second channel resource (CR₁) over the second antenna (13) at the first power level (P₁).

4. Node according to any one of the claims 1 to 3, wherein the node (11) is configured to communicate data (3) in a third channel resource (CRᵢ) over the first and the second antenna (12, 13),
wherein the node (11) is further configured to communicate same data (3) over the first and the second antenna (12, 13) in the third channel resource (CRᵢ).

5. Node according to claim 4, wherein the node is configured to communicate data (3) in the third channel resource (CRᵢ) at a power level (P₃) that is lower than the power levels (P₁, P₂) of the first and second channel resources (CRᵢ) .

6. Node according to claim 4 or 5, wherein the node is configured to use a specific one of all channel resources (CRᵢ) of the communication channel (CH) for the third channel resource (CRᵢ) on both antennas (12, 13).

7. Node according to claim 4 or 5, wherein the node (11) is configured to reserve specific channel resources (CRᵢ) of the communication channel (CH) on both antennas (12, 13) for the channel resources (CRᵢ) having properties of the first channel resource (CRᵢ) and the second channel resource (CRᵢ) respectively, and
wherein the node (11) is further configured to choose and use a specific channel resource (CRᵢ) from said reserved channel resources (CRᵢ) for the third channel resource (CRᵢ) based on a usage of the reserved channel resources (CRᵢ).

8. Node according to any one of the claims 1 to 7, wherein the node (11) is configured to measure the distance of a user terminal (4), preferably by means of a received signal strength indication or a timing advance, and to assign a channel resource (CRᵢ) with a corresponding power level (P₁, P₂, P₃) to this user terminal (4) to communicate data (3) in this channel resource (CRᵢ).

9. Node according to any one of the claims 1 to 8, wherein the channel resources (CRᵢ) are resource blocks according to a 3GPP LTE or LTE-A standard.

10. Cellular network comprising a plurality of nodes (11) according to any one of the claims 1 to 9, wherein one of the antennas (12, 13) of a first node (11) substantially faces one of the antennas (12, 13) of a second node (11).

11. Cellular network according to claim 10 comprising nodes according to claim 3, wherein the first antenna (12) of the first node (11) substantially faces the second antenna (13) of the second node (11).

12. Cellular network according to claim 10 or 11, wherein power levels (P₁, P₂) are classified as high and medium, with respect to one another, and
wherein a node (11) is configured to only communicate data (3) in a channel resource (CRᵢ) at a high power level (P₁) over its first antenna (12) if the power level (P₂) of a channel resource (CRᵢ), used by an antenna (13) facing said first antenna (12), of a neighbouring node (11) is classified as medium.

13. Method for communicating between a user terminal and a node according to any one of the claims 1 to 9 in combination with claim 4, comprising the steps in the following order:
communicating with the user terminal (4) in the second channel resource (CRᵢ) over the first antenna (12) when the user terminal (4) is within a second predetermined distance (10_{2L}) from the node (11);
communicating with the user terminal (4) in the third channel resource (CRᵢ) over the first antenna (12) while simultaneously trying to communicate the same data (3) with the user terminal (4) using the third channel resource (CRᵢ) over the second antenna (13) when the user terminal (4) is within a third predetermined distance (10₃) from the node (11), which is smaller than the second distance (10_{2L}); and
communicating with the user terminal (4) in the third channel resource (CRᵢ) over the second antenna (13) while simultaneously trying to communicate the same data (3) with the user terminal (4) using the third channel resource (CRᵢ) over the first antenna (12) when the user terminal (4) is within the third predetermined distance (10₃) from the node (11).

14. Method according to claim 13, comprising the subsequent step:
communicating with the user terminal (4) in a channel resource (CRᵢ) having the same power level (P₂) as the second channel resource (CRᵢ) over the second antenna (13) when the user terminal (4) is within the second predetermined distance (10_{2R}) from the node (11).

15. Method according to claim 13, wherein the power level (P₂) of the second channel resource (CRᵢ) is higher than the power level (P₃) of the third channel resource (CRᵢ).

## Patentansprüche

1. Knoten für ein zellulares Netzwerk mit einer linearen Zelltopologie zum drahtlosen Kommunizieren mit Benutzerterminals, wobei das Netzwerk mit der linearen Zelltopologie Knoten (2) hat, die kettenartig angeordnet sind und Abdeckungsbereiche (10₁, 10₂) haben, welche im Wesentlichen aneinandergrenzen oder sich überlappen, sodass ein Benutzerterminal (4) sich von einem Knoten (2) zum nächsten ohne Unterbrechung der Kommunikation bewegen kann,
wobei der Knoten (11) einen einzigen Träger (8) hat und dafür ausgebildet ist, Daten (3) in zumindest einer ersten und einer zweiten Kanalressource von Kanalressourcen (CRᵢ) eines Kommunikationskanals (CH) zu kommunizieren, welche in zumindest einer der Komponenten Frequenz (f) und Zeit (t) voneinander separiert sind, und
wobei der Knoten (11) ferner dafür ausgebildet ist, verschiedene Leistungspegel (P₁, P₂) für verschiedene Kanalressourcen der Kanalressourcen (CRᵢ) des Kommunikationskanals zu verwenden,
wobei der Knoten (11) eine erste und eine zweite Richtantenne (12, 13) aufweist, die auf dem einzigen Träger (8) montiert sind, jeweils in eine unterschiedliche Richtung (d_{L}, d_{R}) gerichtet sind und jeweils eine Seite des Knotens (11) abdecken,
wobei der Knoten (11) dafür ausgebildet ist, als eine einzige Zelle des zellularen Netzwerkes (1) zu fungieren, indem er die gleiche Zellkennung über beide Antennen (12, 13) ausstrahlt, und
wobei der Knoten (11) ferner dazu ausgebildet ist, unterschiedliche Daten (3) unabhängig voneinander über die erste und die zweite Antenne (12, 13) in derselben Kanalressource der Kanalressourcen (CRᵢ) des Kommunikationskanals zu kommunizieren.

2. Knoten nach Anspruch 1, wobei der Knoten (11) ferner dafür ausgebildet ist, unterschiedliche Leistungspegel (P₁, P₂) für dieselbe Kanalressource (CRᵢ) über die genannten ersten und zweiten Antennen (12, 13) zu verwenden.

3. Knoten nach Anspruch 1 oder 2, wobei der Knoten (11) dafür ausgebildet ist, Daten (3)
- in der ersten Kanalressource (CR₆) über die erste Antenne (12) mit einem ersten Leistungspegel (P₁),
- in der ersten Kanalressource (CR₆) über die zweite Antenne (13) mit einem zweiten Leistungspegel (P₂), der geringer ist als der erste Leistungspegel (P₁),
- in der zweiten Kanalressource (CR₁) über die erste Antenne (12) mit einem zweiten Leistungspegel (P₂) und
- in der zweiten Kanalressource (CR₁) über die zweite Antenne (13) mit dem ersten Leistungspegel (P₁)
zu kommunizieren.

4. Knoten nach einem der Ansprüche 1 bis 3, wobei der Knoten (11) dafür ausgebildet ist, Daten (3) in einer dritten Kanalressource (CRᵢ) über die erste und die zweite Antenne (12, 13) zu kommunizieren,
wobei der Knoten (11) ferner dafür ausgebildet ist, dieselben Daten (3) über die erste und die zweite Antenne (12, 13) in der dritten Kanalressource (CRᵢ) zu kommunizieren.

5. Knoten nach Anspruch 4, wobei der Knoten (11) dafür ausgebildet ist, Daten (3) in der dritten Kanalressource (CRᵢ) mit einem Leistungspegel (P₃), der geringer ist als die Leistungspegel (P₁, P₂) der ersten und der zweiten Kanalressourcen (CRᵢ), zu kommunizieren.

6. Knoten nach Anspruch 4 oder 5, wobei der Knoten (11) dafür ausgebildet ist, eine spezielle Kanalressource von allen Kanalressourcen (CRᵢ) des Kommunikationskanals (CH) für die dritte Kanalressource (CRᵢ) auf beiden Antennen (12, 13) zu verwenden.

7. Knoten nach Anspruch 4 oder 5, wobei der Knoten (11) dafür ausgebildet ist, eine spezielle Kanalressource (CRᵢ) des Kommunikationskanals (CH) auf beiden Antennen (12, 13) für Kanalressourcen (CRᵢ) mit Eigenschaften der ersten Kanalressource (CRᵢ) und der zweiten Kanalressource (CRᵢ) zu reservieren, und
wobei der Knoten (11) ferner dafür ausgebildet ist, eine spezielle Kanalressource (CRᵢ) aus den genannten reservierten Kanalressourcen (CRᵢ) für die dritte Kanalressource (CRᵢ) basierend auf einer Verwendung der reservierten Kanalressourcen (CRᵢ) auszuwählen und zu verwenden.

8. Knoten nach einem der Ansprüche 1 bis 7, wobei der Knoten (11) dafür ausgebildet ist, die Entfernung eines Benutzerterminals (4) zu messen, bevorzugt mithilfe einer Empfangsfeldstärkenangabe oder einer Timing Advance, und eine Kanalressource (CRᵢ) mit einem entsprechenden Leistungspegel (P₁, P₂, P₃) diesem Benutzerterminal (4) zuzuweisen, um Daten (3) in dieser Kanalressource (CRᵢ) zu kommunizieren.

9. Knoten nach einem der Ansprüche 1 bis 8, bei welchem die Kanalressourcen (CRᵢ) Ressource-Blöcke gemäß einem 3GPP-LTE- oder LTE-A-Standard sind.

10. Zellulares Netzwerk mit einer Vielzahl von Knoten (11) nach einem der Ansprüche 1 bis 9, wobei eine der Antennen (12, 13) eines ersten Knotens (11) im Wesentlichen einer der Antennen (12, 13) eines zweiten Knotens (11) gegenüberliegt.

11. Zellulares Netzwerk nach Anspruch 10 mit Knoten nach Anspruch 3, wobei die erste Antenne (12) des ersten Knotens (11) im Wesentlichen der zweiten Antenne (13) des zweiten Knotens (11) gegenüberliegt.

12. Zellulares Netzwerk nach Anspruch 10 oder 11, bei welchem die Leistungspegel (P₁, P₂) in Bezug zueinander als "hoch" und "mittel" klassifiziert sind, und
wobei ein Knoten (11) dafür ausgebildet ist, nur Daten (3) in einer Kanalressource (CRᵢ) auf einem hohen Leistungspegel (P₁) über seine erste Antenne (12) zu kommunizieren, wenn der Leistungspegel (P₂) einer Kanalressource (CRᵢ), die von einer seiner ersten Antenne (12) gegenüberliegenden Antenne (13) eines Nachbarknotens (11) verwendet wird, als "mittel" klassifiziert ist.

13. Verfahren zum Kommunizieren zwischen einem Benutzerterminal und einem Knoten gemäß einem der Ansprüche 1 bis 9 in Verbindung mit Anspruch 4, umfassend die Schritte in der folgenden Reihenfolge:
Kommunizieren mit dem Benutzerterminal (4) in der zweiten Kanalressource (CRᵢ) über die erste Antenne (12), wenn das Benutzerterminal (4) in einem zweiten vorgegebenen Abstand (10_{2L}) vom Knoten (11) ist;
Kommunizieren mit dem Benutzerterminal (4) in der dritten Kanalressource (CRᵢ) über die erste Antenne (12), während gleichzeitig versucht wird, dieselben Daten (3) mit dem Benutzerterminal (4) unter Verwendung der dritten Kanalressource (CRᵢ) über die zweite Antenne (13) zu kommunizieren, wenn das Benutzerterminal (4) innerhalb eines dritten vorgegebenen Abstandes (10₃) vom Knoten (11) ist, der kleiner ist als der zweite Abstand (10_{2L}); und
Kommunizieren mit dem Benutzerterminal (4) in der dritten Kanalressource (CRᵢ) über die zweite Antenne (13), während gleichzeitig versucht wird, dieselben Daten (3) mit dem Benutzerterminal (4) unter Verwendung der dritten Kanalressource (CRᵢ) über die erste Antenne (12) zu kommunizieren, wenn das Benutzerterminal (4) innerhalb des dritten vorgegebenen Abstandes (10₃) vom Knoten (11) ist.

14. Verfahren nach Anspruch 13, umfassend den darauf folgenden Schritt:
Kommunizieren mit dem Benutzerterminal (4) in einer Kanalressource (CRᵢ) mit demselben Leistungspegel (P₂) wie die zweite Kanalressource (CRᵢ) über die zweite Antenne (13), wenn das Benutzerterminal (4) innerhalb des zweiten vorgegebenen Abstandes (10_{2R}) vom Knoten (11) ist.

15. Verfahren nach Anspruch 13, wobei der Leistungspegel (P₂) der zweiten Kanalressource (CRᵢ) höher ist als der Leistungspegel (P₃) der dritten Kanalressource (CRᵢ).

## Revendications

1. Noeud pour réseau cellulaire doté d'une topologie de cellule linéaire pour communiquer sans fil avec des terminaux d'utilisateurs, où le réseau doté de la topologie de cellule linéaire a des noeuds (2) qui sont agencés sous la forme d'une chaîne et ont des zones de couverture (10₁, 10₂) qui sont pratiquement voisines ou qui se chevauchent de sorte qu'un terminal d'utilisateur (4) peut passer d'un noeud (2) au suivant sans interruption de la communication,
où le noeud (11) a un support unique (8) et est configuré pour communiquer des données (3) dans au moins une première et une deuxième ressource de canal parmi des ressources de canal (CRᵢ) d'un canal de communication (CH), lesquelles sont séparées au niveau d'au moins un élément parmi la fréquence (f) et le temps (t), et
où le noeud (11) est en outre configuré pour utiliser différents niveaux de puissance (P₁, P₂) pour différentes ressources de canal parmi les ressources de canal (CRᵢ) du canal de communication,
où le noeud (11) comprend une première et une seconde antenne directionnelle (12, 13) montées sur le support unique (8), chacune étant orientée dans une direction différente (d_{L}, d_{R}) et chacune couvrant un côté du noeud (11),
où le noeud (11) est configuré pour agir en tant que cellule unique du réseau cellulaire (1) en diffusant le même identifiant (ID) de cellule par les deux antennes (12, 13), et
où le noeud (11) est en outre configuré pour communiquer des données différentes (3) indépendamment sur la première et la seconde antenne (12, 13) dans la même ressource de canal parmi les ressources de canal (CRᵢ) du canal de communication.

2. Noeud selon la revendication 1, où le noeud (11) est en outre configuré pour utiliser différents niveaux de puissance (P₁, P₂) pour une même ressource de canal (CRᵢ) par lesdites première et seconde antennes (12, 13).

3. Noeud selon la revendication 1 ou 2, où le noeud (11) est configuré pour communiquer les données (3)
- dans la première ressource de canal (CR₆) par la première antenne (12) à un premier niveau de puissance (P₁),
- dans la première ressource de canal (CR₆) par la seconde antenne (13) à un deuxième niveau de puissance (P₂), lequel est inférieur au premier niveau de puissance (P₁),
- dans la deuxième ressource de canal (CR₁) par la première antenne (12) au deuxième niveau de puissance (P₂), et
- dans la deuxième ressource de canal (CR₁) par la seconde antenne (13) au premier niveau de puissance (P₁).

4. Noeud selon l'une quelconque des revendications 1 à 3, où le noeud (11) est configuré pour communiquer des données (3) dans une troisième ressource de canal (CRᵢ) par la première et la seconde antenne (12, 13),
où le noeud (11) est en outre configuré pour communiquer les mêmes données (3) par la première et la seconde antenne (12, 13) dans la troisième ressource de canal (CRᵢ).

5. Noeud selon la revendication 4, où le noeud est configuré pour communiquer les données (3) dans la troisième ressource de canal (CRᵢ) à un niveau de puissance (P₃) qui est inférieur aux niveaux de puissance (P₁, P₂) des première et deuxième ressources de canal (CRᵢ).

6. Noeud selon la revendication 4 ou 5, où le noeud est configuré pour utiliser une ressource de canal spécifique parmi toutes les ressources de canal (CRᵢ) du canal de communication (CH) pour la troisième ressource de canal (CRᵢ) sur les deux antennes (12, 13).

7. Noeud selon la revendication 4 ou 5, où le noeud (11) est configuré pour mettre en réserve des ressources de canal spécifiques (CRᵢ) du canal de communication (CH) sur les deux antennes (12, 13) pour les ressources de canal (CRᵢ) ayant les propriétés de la première ressource de canal (CRᵢ) et de la deuxième ressource de canal (CRᵢ), respectivement, et
où le noeud (11) est en outre configuré pour choisir et utiliser une ressource de canal spécifique (CRᵢ) à partir desdites ressources de canal (CRᵢ) mises en réserve pour la troisième ressource de canal (CRᵢ) sur la base d'une utilisation des ressources de canal (CRᵢ) mises en réserve.

8. Noeud selon l'une quelconque des revendications 1 à 7, où le noeud (11) est configuré pour mesurer la distance d'un terminal d'utilisateur (4), de préférence au moyen d'une indication de l'intensité du signal reçu ou d'une avance de synchronisation, et pour attribuer une ressource de canal (CRᵢ) avec un niveau de puissance correspondant (P₁, P₂, P₃) à ce terminal d'utilisateur (4) afin de communiquer les données (3) dans cette ressource de canal (CRᵢ).

9. Noeud selon l'une quelconque des revendications 1 à 8, dans lequel les ressources de canal (CRᵢ) sont des blocs de ressources selon la norme 3GPP LTE ou LTE-A.

10. Réseau cellulaire comprenant une pluralité de noeuds (11) selon l'une quelconque des revendications 1 à 9, dans lequel l'une des antennes (12, 13) d'un premier noeud (11) est sensiblement en face des antennes (12, 13) d'un second noeud (11) .

11. Réseau cellulaire selon la revendication 10, comprenant des noeuds selon la revendication 3, dans lequel la première antenne (12) du premier noeud (11) est sensiblement en face de la seconde antenne (13) du second noeud (11).

12. Réseau cellulaire selon la revendication 10 ou 11, dans lequel les niveaux de puissance (P₁, P₂) sont classés en tant que haut et moyen, l'un par rapport à l'autre, et
dans lequel un noeud (11) est configuré pour communiquer uniquement des données (3) dans une ressource de canal (CRᵢ) à un niveau de puissance élevé (P₁) par sa première antenne (12) si le niveau de puissance (P₂) d'une ressource de canal (CRᵢ), utilisée par une antenne (13) faisant face à ladite première antenne (12), d'un noeud voisin (11) est classé comme moyen.

13. Procédé destiné à communiquer entre un terminal d'utilisateur et un noeud selon l'une quelconque des revendications 1 à 9 en association avec la revendication 4, comprenant les étapes dans l'ordre suivant :
la communication avec le terminal d'utilisateur (4) dans la deuxième ressource de canal (CRᵢ) par la première antenne (12) lorsque le terminal d'utilisateur (4) se situe à l'intérieur d'une deuxième distance prédéterminée (10_{2L}) à partir du noeud (11) ;
la communication avec le terminal d'utilisateur (4) dans la troisième ressource de canal (CRᵢ) par la première antenne (12) tout en essayant de communiquer simultanément les mêmes données (3) avec le terminal d'utilisateur (4) en utilisant la troisième ressource de canal (CRᵢ) par la seconde antenne (13) lorsque le terminal d'utilisateur (4) se situe à l'intérieur d'une troisième distance prédéterminée (10₃) à partir du noeud (11), qui est inférieure à la seconde distance (10_{2L}) ; et
la communication avec le terminal d'utilisateur (4) dans la troisième ressource de canal (CRᵢ) par la seconde antenne (13) tout en essayant de communiquer simultanément les mêmes données (3) avec le terminal d'utilisateur (4) en utilisant la troisième ressource de canal (CRᵢ) par la première antenne (12) lorsque le terminal d'utilisateur (4) se situe à l'intérieur de la troisième distance prédéterminée (10₃) à partir du noeud (11) .

14. Procédé selon la revendication 13, comprenant l'étape suivante :
la communication avec le terminal d'utilisateur (4) dans une ressource de canal (CRᵢ) ayant le même niveau de puissance (P₂) que la deuxième ressource de canal (CRᵢ) par la seconde antenne (13) lorsque le terminal utilisateur (4) se situe à l'intérieur de la deuxième distance prédéterminée (10_{2L}) à partir du noeud (11).

15. Procédé selon la revendication 13, dans lequel le niveau de puissance (P₂) de la deuxième ressource de canal (CRᵢ) est supérieur au niveau de puissance (P₃) de la troisième ressource de canal (CRᵢ).
